# EUROPEAN PATENT SPECIFICATION

(11) **EP 0 765 650 B1**
(45) Date of publication and mention of the grant of the patent: **05.12.2001**
(21) Application number: 96202663.9
(22) Date of filing: 24.09.1996
(51) Int. Cl.: A61H 33/00, F16K 1/20

(54) **Intake opening for water-massage baths**
Saugdüse für Hydromassage-Badewanne
Buse d'aspiration pour bains d'hydromassage

(30) Priority: 29.09.1995 IT TV950115
(43) Date of publication of application: 02.04.1997
(73) Proprietor: Jacuzzi Europe Spa, 33098 Valvasone (Pordenone) (IT)
(72) Inventor: Furlan, Livio, 33170 Pordenone (IT)
(74) Representative: Dragotti, Gianfranco

(56) References cited:
- EP-B- 0 454 177
- DE-A- 3 717 508
- US-A- 4 174 091

## Description

The subject of the present invention is an intake opening for water-massage baths.

In water-massage baths, the intake openings enable water held in the bath to be withdrawn for supply to the output openings. For this purpose, the intake openings are connected by means of intake pipes to a circulation pump which sends the water withdrawn from the bath to the output openings through suitable delivery pipes.

Water-massage intake openings are known and it is also known for such an opening to be formed essentially as a box-like body which, on the one hand, is in communication with the interior of the bath, and, on the other hand, is connected to an intake pipe which in turn is connected to a circulation pump. Inside the box-like body there is a shut-off valve member which can adopt two operative conditions. More precisely, the shut-off member has a closure member which is movable by suitable operating means between a rest or closure position of the valve member in which the water cannot flow into the intake pipe and a working or open position of the valve member in which the water flows freely into the intake pipe.

Naturally, when it is desired to take a bath without or with water-massage, the operating means are activated to bring the closure member to the first or second position, respectively.

Technology for the production of intake openings is known and has been developing gradually even in quite recent years.

According to a first teaching of the prior art, the closure member of the opening is opened and closed by the action of the water coming from the water-supply mains, to which the opening is connected. In this case, the closure member is movable axially and is kept in the closed position by resilient means associated therewith. When the opening is put into communication with the water mains, the pressure of the water flowing inside it causes the closure member to move to the open position against the action of the resilient means.

It is known that conventional openings having the structure just briefly described constitute essentially valuable solutions, however, they are not without disadvantages, as described briefly below.

A first disadvantage arises from the connection of the opening to the water mains since this connection, which is not provided in normal baths, requires the provision of a suitable circuit which is quite complex. In fact, it generally comprises at least one supply pipe, a solenoid valve fitted in the pipe, and means for controlling the solenoid valve.

Moreover, the solenoid valve has to be of a considerable power since the water-mains supplypressure is quite high. It can be inferred from this that the current involved in keeping the solenoid valve open is considerable, as is the cost of its activation.

Moreover, it is generally necessary to provide a pressure reducer in the supply pipe of the opening in order not to have too great a pressure on the operating components of the opening which arc generally made of plastics material.

Another considerable disadvantage results from the fact that the shut-off solenoid valve has to remain activated throughout the water-massage period, resulting in a large amount of stress which may cause it to wear prematurely.

To prevent the problems mentioned above, the usual teaching has been to provide openings which still have axially movable closure members, but which are not connected to the water mains.

In openings of this type, the closure member is also kept in the closed position by the action of resilient means whereas it is opened by the vacuum generated by the suction pump.

Examples of these openings are those described and illustrated in the Applicant's patent application No. TV95A 000028 filed on 9th March 1995.

It has been found, however, that, since the intake pump initially lacks water, it does not generate a vasuum in the intake pipe or is not primed so that it is very difficult if not impossible to open the closure member and thus start the flow of water in the water-massage system.

Means have therefore been provided in the opening for putting its interior, which is fall of water, into communication with the interior of the intake pipe. A water-flow is thus created in the latter and primes the intake pump.

The means are of the type with controlled opening and are generally constituted by a hole in the intake pipe putting it into communication with the interior of the opening, the hole being kept closed or open, according to need, by suitable electromagnetic operating means such as, for example, a solenoid valve or the like.

The openings mentioned above were clearly found advantageous in comparison with the previous type, but were nevertheless found still to give rise to problems which, added together, made them unreliable in operation.

A first problem found was the long time required to introduce enough water into the intake pipe to prime the intake pump. In fact the dimensions of the hole mentioned above for admitting water to the intake pipe have to be limited in order not to compromise the integrity of the pipe concerned. The flow-rate of water from inside the opening into the intake pipe is therefore low and the time required for the desired quantity to be reached is consequently long.

A further disadvantage closely connected with the previous one results from the fact that, even if a hole of sufficient or in any case suitable capacity is formed, the electromagnetic means for opening and closing it have to be of a corresponding size and thus involve considerable consumption.

Another disadvantage of this type of opening results from the need to provide a suitable control for the electromagnetic means for closing the hole for supplying water to the intake pipe. Furthermore, the user, who has to operate the control, cannot know exactly when to close the hole in question so that his intervention is quite likely to be incorrect.

In particular, it is known from EP 454 177 B a water basin with an air bubble device connected to a circulation pump through a suction line equipped with a holding valve which opens by action of the suction force of the pump water line and closes the same line when the said suction force is insufficient No further details are disclosed about the construction and functionality of the valve since the patent is specifically directed to the addition of chemicals to the flow circuit.

An intake opening for water-massage baths which eliminates the problems of conventional openings has now been devised and constitutes the subject of the present invention.

One of the main objects of the present invention is thus to provide a water-massage intake opening in which the opening of the closure member in order to put its interior into communication with the intake pipe is facilitated so that its operating means are simplified and cheap.

A further object of the present invention is to provide an intake opening by means of which the pump is primed directly by the opening of the closure member so that the provision of the additional means referred to above is no longer necessary, resulting in a structural simplification of the opening and a considerable reduction in production costs.

Another object of the invention is to provide a water-massage opening in which, since the additional means for priming the pump in conventional openings have been eliminated, it is no longer necessary to provide for them to be switched off with the adverse consequences mentioned above.

One of the chief objects of the present invention is to provide a water-massage opening in which the operating means for opening its closure member operate for an extremely limited time and during part of its opening which takes place almost entirely by means of the flow of water entering the intake pipe.

Another object achieved by the opening according to the present invention is that the pump is primed in extremely short times.

The subject of the present invention is therefore an intake opening according to the subsequent claims.

Further characteristics and the objects as well as the advantages of the opening according to the present invention will become clear from the following detailed description of a non-limiting embodiment thereof given with reference to the appended drawings, in which:
- Figure 1 is a longitudinal section of the opening according to the invention with its closure member in the closed position;
- Figure 2 is a view similar to Figure 1 with the closure member parally open;
- Figure 3 is a view similar to Figures 1 and 2 with the closure member fully open;
- Figure 4 is a view of the opening taken in the direction of the arrow F of Figure 1;
- Figure 5 is a view of the detail of the opening enclosed in a circle in Figure 4, on an enlarged scale, in a first operative condition;
- Figure 6 is a view similar to Figure 5 of the same detail, in a second operative position.

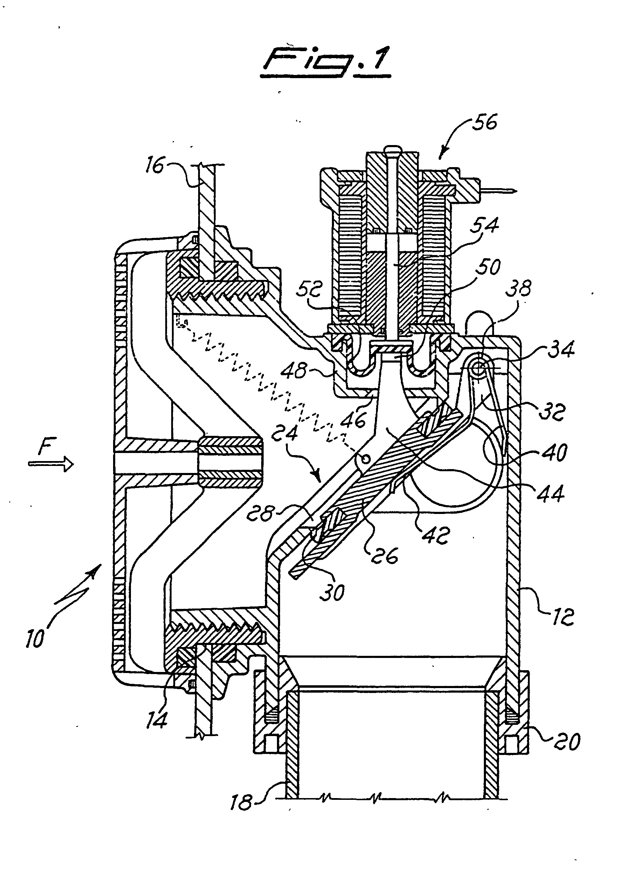

With reference first of all to Figures 1 to 3, the intake opening is generally indicated 10 and it can be seen that it comprises a box-like body 12 fixed by known means to the edge 14 of a hole formed in the wall 16 of a water-massage bath-tub.

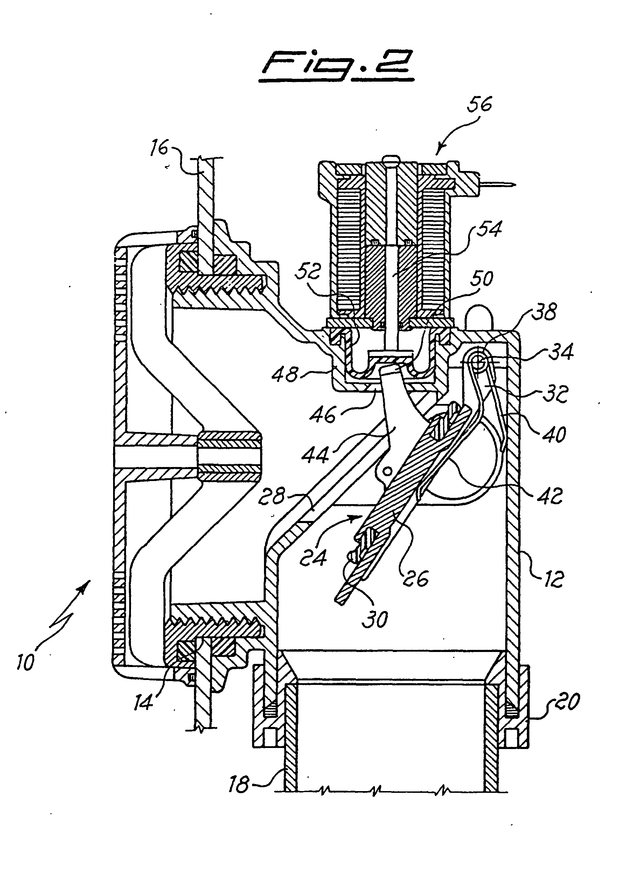

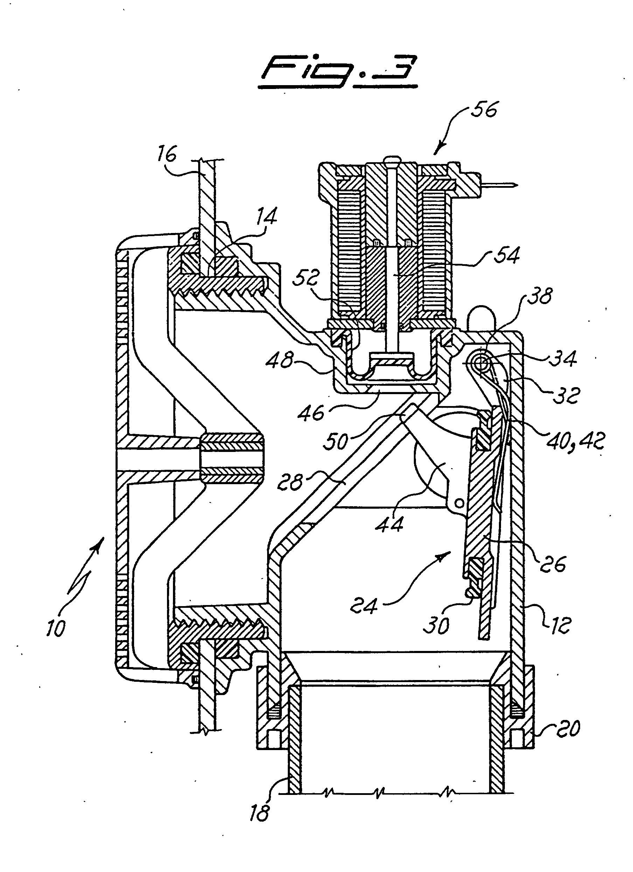

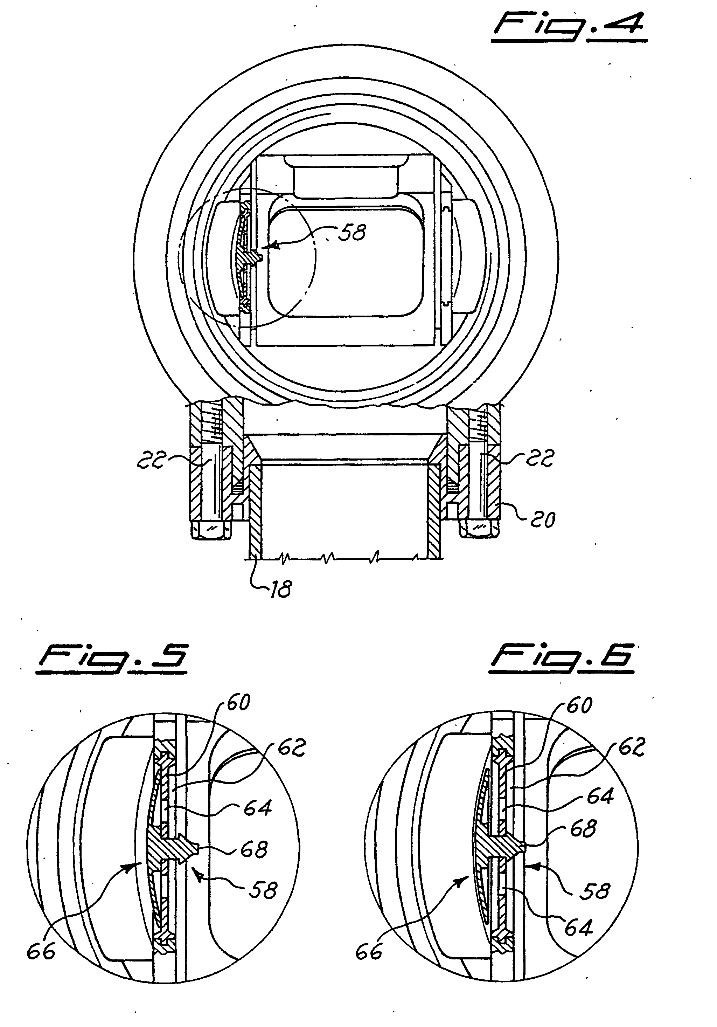

The body 12 of the opening 10 is connected to the end of the intake pipe 18 of a circulation pump (not shown) by means of a flange 20 and clamping screws 22 visible in particular in Figure 4. With this particularly advantageous arrangement, the opening can easily be separated from the intake pipe 18, for example, for maintenance or even for replacement. Inside the body 12 of the opening 10 there are shut-off valve means, generally indicated 24, which can adopt two operative positions of which the first, shown in Figure 1, corresponds to the rest position in which it prevents the water held in the opening from passing into the intake pipe 18.The second operative condition, which is shown in Figure 3 and which the valve member reaches by passing through the condition shown in Figure 2, corresponds to the working position in which the water flows freely into the intake pipe 18.

Clearly, if it is desired to take a bath without water-massage, the valve means 24 is are kept in the position of Figure 1 whereas, if it is desired to take a bath with water-massage, the valve means are brought to the position shown in Figure 3.

The valve means 24 comprises a hole 28 and a closure member which has a seal substantially on its periphery for the leaktight closure of the hole 28.

The closure member 26 is constituted, more particularly, by a plate, preferably made of a single piece of plastics material, which is hinged on the body 12 of the opening 10. In fact, as can be seen from Figures 1 to 3, one end of the plate constituting the closure member 26 has a pair of appendages 32, only one of which is visible in the drawings concerned, by means of which the plate is hinged on a pin 34 which extends parallel to the plane of the closure member 26 and is fixed at its ends to two opposed faces of the body 12 of the opening 10.

The closure member 26 is kept in the closure position by the action of resilient means which, in the embodiment in question, are constituted by a helical spring the body 38 of which is wound on the pin 34, the spring having a first arm 40 which engages the rear wall of the opening 10 and a second arm 42 which engages the rear face of the closure member 26.

The front face of the plate constituting the closure member 26 has a projecting, shaped appendage 44, the body of which is partly inserted in a hole 46 in a recessed portion 48 of the body 12 of the opening 10 when the closure member 26 is in the closed and partially-open conditions.

When the closure member 26 is in the closed and partially-open conditions (Figures 1 and 2), the end 50 of the appendage 44 engages, with the interposition of a deformable diaphragm, the movable element 54 of an electromagnet 56 which is operated simultaneously with the circulation pump and, for this purpose is connected in parallel therewith.

As well as transmitting the movement of the movable element 54 of the electromagnet 56 to the appendage 44 of the closure member 26, the deformable diaphragm 52 performs the important function of sealing the inside of the opening 10 from the exterior and, for this purpose, as can be seen from Figures 1 to 3, it is connected to the edge of the recessed portion 48 in a known, leaktight manner.

According to one of the fundamental characteristics of the opening according to the present invention, the closure member 26 can be pivoted from the closed condition of Figure 1 to the open condition of Figure 3 anticlockwise and, more precisely, in the sense concordant with the flow of water entering the intake pipe.

Pivoting in the opposite sense to that just indicated is prevented both by the engagement of the seal 30 with the peripheral edge of the hole 28 and because the cross-section of the plate constituting the closure member 26 is larger than that of the hole 28.

This aspect is particularly advantageous since the initial partial opening of the closure member 26, that is, its movement from the position of Figure 1 to that of Figure 2, is brought about by the electromagnet 56 which, at this point, stops acting on the closure member 26 which continues its. opening travel or pivoting so as to be brought to the final condition of Figure 3 owing to the action of the water-flow entering the intake pipe 18.

The advantages of the configuration and the operation just described are clear. First of all, the solenoid valve 56 is activated for a very limited time corresponding to the partial opening of the closure member 26, whereas for the rest of the opening it is inactive so that it can also be deactivated, for example, by means of a known timer, not shown, so that the stresses to which it is subjected are very limited.

Moreover, the timing does not have to be calculated precisely since, once the closure member 26 has started to open it continues in any case, as explained above.

According to a further characteristic of the opening according to the invention, with reference now to Figures 4 to 6, it has a valve, generally indicated 58, for draining or discharging water from the intake pipe 18 upon completion of the water-massage.

The valve 58 is essentially a "mushroom" valve and is composed essentially of a fixed portion or wall 60 which is fixed at its periphery to the edge of a hole 62 in the body 12 of the opening 10 and which has holes 64 for the outlet of the water from the opening 10.

The valve 58 also has a movable device or closure member, generally indicated 66, which is constituted essentially by a floating diaphragm movable from the open position of Figure 6 to the closed position of Figure 5 by the action of the water entering the opening 10.

The floating member or closure member 66 has a central, shaped appendage 68 which can slide in a hole in the wall 60 and has an enlarged end which engages the wall 60 when the valve 58 is in the open condition.

The advantages resulting from the use of the opening according to the present invention, the principles of which, moreover, have already been referred to above, are clear from the foregoing.

The fact that the closure member is opened directly by suitable means, for example an electromagnet, for a first partial opening thereof, whereas the electromagnet does not take part in the complete opening of the closure member which is brought to this position by the flow of the water entering the intake pipe 18 is particularly advantageous.

A further considerable advantage consists of the fact that the size of the electromagnet for bringing about the partial opening of the closure member is limited and the consumption of such operating means is clearly low.

Another notable advantage of the opening according to the present invention consists of the fact that the initial, partial opening of the closure member already allows sufficient filling of the intake pipe and hence priming of the intake pump, considerably reducing the start-up times of the water-massage system.

Finally, conceptually and functionally equivalent variations and/or modifications may clearly be applied to the intake opening for water-massage baths according to the present invention without thereby departing from the scope of its protection.

For example, the resilient means for keeping the closure member 26 closed may be arranged so as to connect its outer face to the inside of the opening. This possible variant is shown in broken outline solely in Figure 1.

## Claims

1. Intake opening (10) for water-massage baths, connected to the intake pipe (18) of a circulation pump, having a body (12) and shut-off valve means (24) comprising a hole (28) and a closure member (26) which is movable from a closed position, where it is kept by the action of resilient means and water is prevented from entering into the intake pipe (18), to a fully open position, where water is allowed to flow into the said intake pipe (18), **characterized in that** at one of its ends the closure member (26) is provided with a pin (34) hinged onto the body (12) of the intake opening (10) and that operating means (56) are provided which are adapted to perform only an initial and partial opening of the said closure member (26), the latter being adapted to be brought into its fully open position by the action of the water flowing into the intake pipe (18).

2. Intake opening (10) according to Claim 1, **characterized in that** the closure member (26) essentially consists in a plate having, at its outer face relative to the intake pipe (18), a shaped appendage (44) which is adapted to be engaged by the said operating means (56) during the initial and partial opening of the closure member (26).

3. Intake opening (10) according to Claim 2, **characterized in that** the resilient means adapted to keep the said closure member (26) in the closed position consist in a helical spring having a central body (38) which is wound onto the said hinge pin (34) and in a first (40) and a second arm (42) which engage an internal face of the body (12) of the intake opening (10), respectively the opposite face of the closure member (26).

4. Intake opening (10) according to Claim 2, **characterized in that** the resilient means adapted to keep the said closure member (26) in a closed position consist in a spring connecting the outer face relative to the intake pipe (18) to the interior of the intake opening (10).

5. Intake opening (10) according to any of the preceding Claims, **characterized in that** the said operating means (56), which are adapted to perform only an initial and partial opening of the closure member (26), consist in an electromagnet which, when energized, causes its movable element (54) to engage with the end (50) of the said appendage (44) with the interposition of a deformable diaphragm (52) housed in a recessed portion (48) of the body (12) of the intake opening (10).

6. Intake opening (10) according to any of the previous Claims, **characterized in that** its body (12) is connected to the end of the intake pipe (18) through a flange (20) and clamping means (22).

7. Intake opening (10) according to any of the previous Claims, **characterized in that**, a valve (58) is provided consisting in a wall (60) fixed to the lower portion of the body (12) of the intake opening (10) and provided with holes (64) and a substantially mushroom-shaped member (66) which is selectively displaceable, as a result of the presence or absence of water inside the intake opening (10), between a first position in contact with the wall (60) to close the said holes (64) and a second position away from the wall (60) to open the same holes (64) so as to ensure the water drain through the holes (64) upon completion of the water massage.

## Patentansprüche

1. Ansaugöffnung (10) für Hydromassage-Badewannen, die mit dem Ansaugrohr (18) einer Zirkulationspumpe verbunden ist, mit einem Körper (12) und einem Abschlußventilmittel (24), das ein Loch (28) und ein Verschlußteil (26) aufweist, das von einer geschlossenen Position, an der es durch die Wirkung eines federnden Mittels gehalten wird, und Wasser an dem Eindringen in das Ansaugrohr (18) gehindert wird, zu einer voll geöffneten Position, an der das Wasser in das Ansaugrohr (18) strömen darf, bewegbar ist,
**dadurch gekennzeichnet,**
**daß** an einem seiner Enden das Verschlußteil (26) mit einem Zapfen (34) versehen ist, der an dem Körper (12) der Ansaugöffnung (10 ) angelenkt ist, und
**daß** Betriebsmittel (56) vorgesehen sind, die ausgelegt sind nur zum Durchführen eines anfänglichen und teilweisen Öffnens des Verschlußteiles (26), wobei das letztere dazu ausgelegt ist, in seiner voll offenen Position durch die Wirkung des Wassers gebracht zu werden, das in das Ansaugrohr (18) strömt.

2. Ansaugöffnung (10) nach Anspruch 1,
**dadurch gekennzeichnet,**
**daß** das Verschlußteil (26) im wesentlichen aus einer Platte besteht mit an seiner äußeren Fläche relativ zu dem Ansaugrohr (18) einem geformten Ansatz (44), der ausgelegt ist zum Eingriff mit dem Betriebsmittel (56) während des anfänglichen und teilweisen Öffnens des Verschlußteiles (26).

3. Ansaugöffnung (10) nach Anspruch 2,
**dadurch gekennzeichnet,**
**daß** das federnde Mittel, das zum Halten des Verschlußteiles (26) in der geschlossenen Position ausgelegt ist, aus einer Schraubenfeder besteht mit einem Mittelkörper (38), der auf den Gelenkzapfen (34) gewickelt ist, und einem ersten (40) und einem zweiten Arm (42), die an eine Innenfläche des Körpers (12) der Ansaugöffnung (10) bzw. an die gegenüberliegende Fläche des Verschlußteiles (26) angreifen.

4. Ansaugöffnung (10) nach Anspruch 2,
**dadurch gekennzeichnet,**
**daß** das federnde Mittel, das zum Halten des Verschlußteiles (26) in einer geschlossenen Position ausgelegt ist, aus einer Feder besteht, die die äußere Fläche relativ zu dem Ansaugrohr (18) mit dem Inneren der Ansaugöffnung (10) verbindet.

5. Ansaugöffnung (10) nach einem der vorhergehenden Ansprüche,
**dadurch gekennzeichnet,**
**daß** die Betriebsmittel (56), die ausgelegt sind zum Durchführen nur eines anfänglichen und teilweisen Öffnens des Verschlußteiles (26), aus einem Elektromagneten bestehen, der, wenn er erregt wird, verursacht, daß sein bewegbares Element (54) in Eingriff mit dem Ende (50) des Ansatzes (44) kommt, wobei ein verformbares Diaphragma (52) dazwischengefügt ist, das in einem ausgenommenen Abschnitt (48) des Körpers (12) der Ansaugöffnung (10) aufgenommen ist.

6. Ansaugöffnung (10) nach einem der vorhergehenden Ansprüche,
**dadurch gekennzeichnet,**
**daß** sein Körper (12) mit dem Ende des Ansaugrohres (18) durch einen Flansch (20) und ein Klemmittel (22) verbunden ist.

7. Ansaugöffnung (10) nach einem der vorhergehenden Ansprüche,
**dadurch gekennzeichnet,**
**daß** ein Ventil (58) vorgesehen ist, das in einer Wand (60) existiert, die an dem unteren Abschnitt des Körpers (12) der Ansaugöffnung (10) befestigt ist und mit Löchern (64) versehen ist, und einem im wesentlichen pilzförmigen Teil (66), das ausgewählt versetzbar ist als Resultat des Vorhandenseins oder der Abwesenheit von Wasser innerhalb der Ansaugöffnung (10), zwischen einer ersten Position in Kontakt mit der Wand (60) zum Schließen der Löcher (64) und einer zweiten Position weg von der Wand (60) zum Öffnen der gleichen Löcher (64) so, daß der Wasserabfluß durch die Löcher (64) nach dem Beenden der Hydromassage sichergestellt ist.

## Revendications

1. Ouverture d'admission (10) de bains de massage à eau, connectée au tuyau d'admission (18) d'une pompe de circulation, ayant un corps (12) et des moyens formant vanne d'arrêt (24) comportant un trou (28) et un élément de fermeture (26) qui est mobile à partir d'une position fermée dans laquelle il est maintenu par l'action de moyens élastiques, et dans laquelle l'eau ne peut pas entrer dans le tuyau d'admission (18), jusqu'à une position entièrement ouverte dans laquelle l'eau peut s'écouler dans ledit tuyau d'admission (18), **caractérisée en ce qu'**à une première de ses extrémités, l'élément de fermeture (26) est muni d'un axe (34) articulé sur le corps (12) de l'ouverture d'admission (10), et **en ce que** des moyens d'actionnement (56) sont fournis, qui sont adaptés pour effectuer seulement une ouverture initiale et partielle dudit élément de fermeture (26), ce dernier étant adapté pour être amené dans sa position entièrement ouverte par l'action de l'eau s'écoulant dans le tuyau d'admission (18).

2. Ouverture d'admission (10) selon la revendication 1, **caractérisée en ce que** l'élément de fermeture (26) est essentiellement constitué d'une plaque ayant, au niveau de sa face extérieure par rapport au tuyau d'admission (18), un accessoire mis en forme (44) qui est adapté pour être en contact avec lesdits moyens d'actionnement (56) pendant l'ouverture initiale et partielle de l'élément de fermeture (26).

3. Ouverture d'admission (10) selon la revend ication 2, **caractérisée en ce que** les moyens élastiques adaptés pour maintenir ledit élément de fermeture (26) dans la position fermée sont constitués d'un ressort hélicoïdal ayant un corps central (38) qui est enroulé sur ledit axe d'articulation (34), et un premier bras (40) et un second bras (42) qui viennent en contact avec une face interne du corps (12) de l'ouverture d'admission (10), et respectivement la face opposée de l'élément de fermeture (26).

4. Ouverture d'admission (10) selon la revend ication 2, **caractérisée en ce que** les moyens élastiques adaptés pour maintenir ledit élément de fermeture (26) dans une position fermée sont constitués d'un ressort reliant la face extérieure par rapport au tuyau d'admission (18) à l'intérieur de l'ouverture d'admission (10).

5. Ouverture d'admission (10) selon l'une quelconque des revendications précédentes, **caractérisée en ce que** lesdits moyens d'actionnement (56), qui sont adaptés pour effectuer seulement une ouverture initiale et partielle de l'élément de fermeture (26), sont constitués d'un électroaimant qui, lorsqu'il est mis sous tension, entraîne son élément mobile (54) à venir en contact avec l'extrémité (50) dudit accessoire (44), une membrane déformable (52) reçue dans une partie évidée (48) du corps (12) de l'ouverture d'admission (10) étant interposée.

6. Ouverture d'admission (10) selon l'une quelconque des revendications précédentes, **caractérisée en ce que** son corps (12) est. connecté à l'extrémité du tuyau d'admission (18) par l'intermédiaire d'un rebord (20) et de moyens de serrage (22).

7. Ouverture d'admission (10) selon l'une quelconque des revendications précédentes, **caractérisée en ce qu'**un clapet (58) est fourni, constitué d'une paroi (60) fixée sur la partie inférieure du corps (12) de l'ouverture d'admission (10), et munie de trous (64) et d'un élément sensiblement en forme de champignon (66) qui est mobile de manière sélective, en résultat de la présence ou de l'absence d'eau à l'intérieur de l'ouverture d'admission (10), entre une première position en contact avec la paroi (60) pour fermer lesdits trous (64), et une seconde position loin de la paroi (60) pour ouvrir les mêmes trous (64), de manière à garantir l'évacuation de l'eau à travers les trous (64) à la fin du massage à l'eau.
